Europäisches Patentamt

European Patent Office

Office européen des brevets

(19)

(11) Numéro de publication: **0 220 991 B1**

(12) **FASCICULE DE BREVET EUROPEEN**

(45) Date de publication de fascicule du brevet: **25.09.91**

(51) Int. Cl.⁵: **G11B 27/30,** G11B 27/34, G11B 27/10, //H04N5/76, H04N5/93

(21) Numéro de dépôt: **86402377.5**

(22) Date de dépôt: **23.10.86**

Demande divisionnaire 89200373.2 déposée le 23/10/86.

(54) **Appareil d'enregistrement et/ou de reproduction notamment d'images fixes.**

(30) Priorité: **23.10.85 JP 236569/85**
**23.10.85 JP 236570/85**
**29.10.85 JP 242446/85**

(43) Date de publication de la demande:
**06.05.87 Bulletin 87/19**

(45) Mention de la délivrance du brevet:
**25.09.91 Bulletin 91/39**

(84) Etats contractants désignés:
**AT DE FR GB NL**

(56) Documents cités:
**EP-A- 0 081 958      EP-A- 0 105 213**
**DE-A- 3 008 190      FR-A- 2 529 004**
**FR-A- 2 544 536      US-A- 4 446 488**

**PATENT ABSTRACTS OF JAPAN, vol. 9, no. 76 (P-346)[1799], 5 avril 1985; & JP - A - 59 207 407 (NIPPON VICTOR) 24-11-1984**

**PATENT ABSTRACTS OF JAPAN, vol. 9, no. 217 (P-385)[1940], 4 avril 1985; & JP - A - 60 76071 (AKAI) 30-04-1985**

**Encyclopedia of computer science (VNR) p.516-517**

(73) Titulaire: **SONY CORPORATION**
**7-35 Kitashinagawa 6-Chome Shinagawa-ku Tokyo 141(JP)**

(72) Inventeur: **Tanaka, Satomi C/o SONY CORPO-RATION**
**7-35, Kitashinagawa 6-chome Shinagawa 6-chome**
**Shinagawa-ku Tokyo(JP)**
Inventeur: **Ichimura, Eiichi C/o SONY CORPO-RATION**
**7-35, Kitashinagawa 6-chome Shinagawa-ku Tokyo(JP)**

(74) Mandataire: **Cabinet Pierre HERRBURGER**
**115, Boulevard Haussmann**
**F-75008 Paris(FR)**

## Description

La présente invention concerne de façon générale un appareil d'enregistrement et/ou de reproduction d'images fixes et plus particulièrement un appareil d'enregistrement et/ou de reproduction utilisant comme support d'enregistrement un disque magnétique.

On connaît différents types d'appareils d'enregistrement et/ou de reproduction d'images fixes utilisant un disque d'enregistrement magnétique en forme de feuille. Plus particulièrement récemment, il a été développé un nouveau disque souple de 2 inches destiné initialement à un appareil photographique électronique. Cependant, on estime actuellement qu'un tel disque souple de petite dimension peut s'utiliser non seulement dans un appareil photographique électronique mais également à d'autres fins comme par exemple la reproduction ou l'enregistrement d'une image vidéo fixe, l'enregistrement d'informations audio ou de données numériques etc.

Les demandes et brevets antérieurs appartenant aux présents demandeurs ont concerné principalement la structure de l'enveloppe recevant le disque d'enregistrement magnétique ou disque souple de faible diamètre, la structure de l'appareil dans lequel on place la pochette pendant l'enregistrement et/ou la reproduction des signaux du disque ainsi que le format du signal enregistré etc. L'art antérieur ne contient toutefois aucune information relative aux fonctions de l'appareil d'enregistrement et/ou de reproduction en particulier pour utiliser le petit disque souple ci-dessus à des fins d'enregistrement de différents types de signaux d'information suivant une séquence mélangée.

On connaît également par la demande européenne N° 105 213 un système d'image photographique électronique dans lequel l'information image est enregistrée sur un disque magnétique avec des signaux codés numériques relatifs à la nature de l'image enregistrée, au nombre de pistes de l'enregistrement, à la date et l'heure de cet enregistrement, ces informations étant affichées pendant la reproduction de l'image. Les signaux codés distinguent au moins un type qui nécessite plus d'une piste pour une représentation plus exacte d'une information par rapport à la représentation de la même information au moyen d'un autre type utilisant une seule piste. Une utilisation plus intensive du même espace du disque y est indiquée.

Selon la revue Encyclopedia of Computer Science, 1976, pages 516 et 517, il est également fait état du principe de recherche d'une erreur dans l'exécution d'un programme, dit principe "Dump".

Vis-à-vis de ces dispositifs connus, la présente invention, telle qu'elle est caractérisée dans la revendication 1, concerne un appareil d'enregistrement et/ou de reproduction de différents types de signaux d'information sur des pistes d'enregistrement circulaires concentriques d'un disque d'enregistrement magnétique, cet appareil comprenant un moteur pour entraîner en rotation, à une vitesse prédéterminée, le disque d'enregistrement magnétique, au moins un transducteur pour coopérer avec le disque d'enregistrement magnétique et enregistrer et/ou reproduire les signaux d'information sur les pistes d'enregistrement, un moyen de positionnement couplé au transducteur pour le positionner sur une piste choisie parmi les pistes d'enregistrement, un moyen d'enregistrement pour enregistrer des signaux d'identification correspondant aux différents types de signaux d'information enregistrés sur les pistes d'enregistrement et un moyen d'affichage couplé au moyen d'enregistrement des signaux d'identification pour afficher la marque d'identification des différents types de signaux d'information dont au moins un type nécessite plus d'une piste pour une représentation plus exacte d'une information par rapport à la représentation de la même information au moyen d'un autre type utilisant une seule piste, ainsi que les identifications des pistes d'enregistrement dans lesquelles ces signaux d'information sont enregistrés, appareil caractérisé en ce qu'il comporte des moyens couplés aux moyens de positionnement du transducteur pour positionner, lorsque cela est demandé, le transducteur par rapport à toutes les pistes d'enregistrement et pour enregistrer la totalité de ces signaux d'identification de toutes les pistes d'enregistrement dans le moyen d'enregistrement afin que le moyen d'affichage affiche la totalité des marques d'identification des différents types de signaux d'information et cela simultanément avec la référence du nombre de pistes d'enregistrement.

La présente invention a pour but de créer un appareil d'enregistrement d'un disque stockant des signaux, dont quelques-uns nécessitent des espaces différents pour la représentation plus ou moins exacte de la même information lequel appareil peut afficher, sous la forme d'un tableau, l'état d'occupation des pistes du disque et lequel affichage permet un bon jugement de la disponibilité de l'espace du disque.

D'autres caractéristiques de l'invention sont énoncées dans les autres revendications.

La présente invention sera décrite de façon plus détaillée à l'aide des dessins annexés, dans lesquels :
- la figure 1 est un schéma-bloc d'un circuit d'un appareil d'enregistrement et/ou de reproduction d'une image fixe selon un mode de réalisation de la présente invention.
- la figure 2 est une vue en perspective d'un appareil d'enregistrement et/ou de reproduction d'une image fixe selon la présente invention montrant particulièrement le tableau de commande.

- la figure 3 est une vue en élévation schématique partiellement coupée du moyen d'entraînement du disque de l'appareil d'enregistrement et/ou de reproduction selon l'invention.

- la figure 4 est une vue en perspective d'un contrôleur de programme selon l'invention, montrant en particulier la disposition du tableau de commande.

- la figure 5 est un ordinogramme servant à expliquer le fonctionnement de l'appareil d'enregistrement et/ou de reproduction selon la figure 2.

- la figure 6 est un schéma d'un exemple d'affichage apparaissant sur le tube cathodique de l'appareil selon l'invention.

- la figure 7 est un ordinogramme d'un sous-programme faisant partie de l'ordinogramme de la figure 5.

- la figure 8 (qui se compose des figures 8-I et 8-II apparaissant sur deux feuilles pour permettre l'utilisation d'une échelle suffisante grande) est un ordinogramme servant à expliquer l'utilisation du contrôleur de programme de la figure 4 pour créer un programme de lecture défini par l'utilisateur.

- la figure 9 est un ordinogramme servant à expliquer l'exécution d'un programme mélangé enregistré dans une mémoire vive.

- la figure 10 est un ordinogramme montrant la mise en oeuvre du contrôleur de programme selon l'invention et auquel il sera fait référence pour expliquer l'une des fonctions les plus avantageuses de l'appareil.

## DESCRIPTION D'UN MODE DE REALISATION PREFERENTIEL :

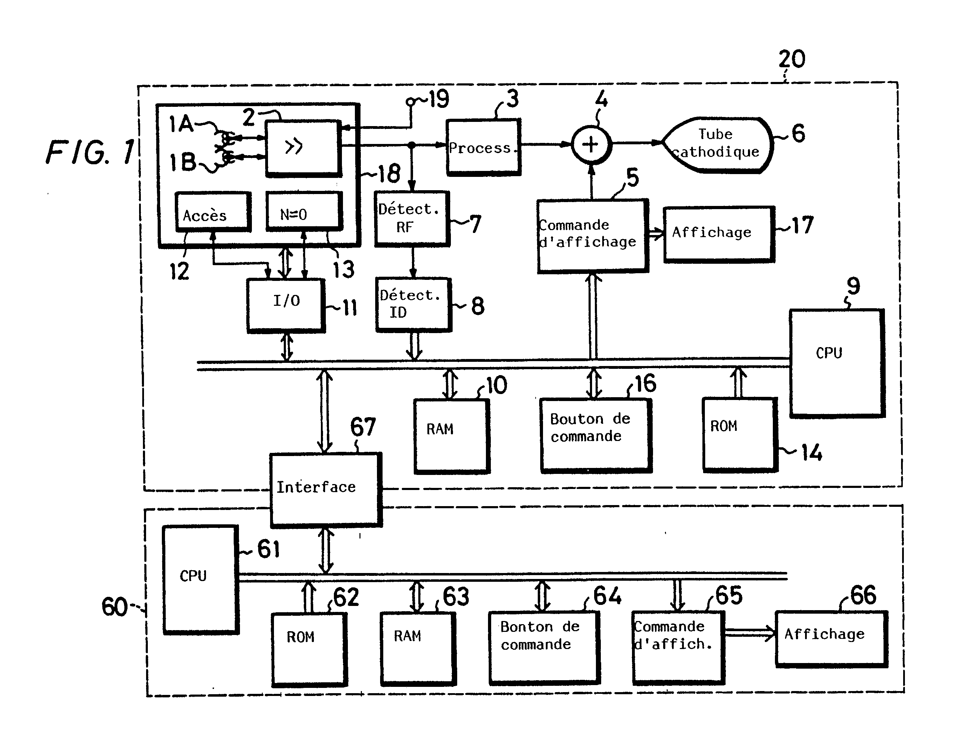

De manière détaillée selon la figure 1, un appareil d'enregistrement et/ou de reproduction d'une image fixe selon un mode de réalisation de la présente invention se compose de manière générale d'un appareil d'enregistrement et/ou de reproduction 20 qui exécute les opérations d'enregistrement et/ou de reproduction ainsi que d'un moyen de commande de programme 60.

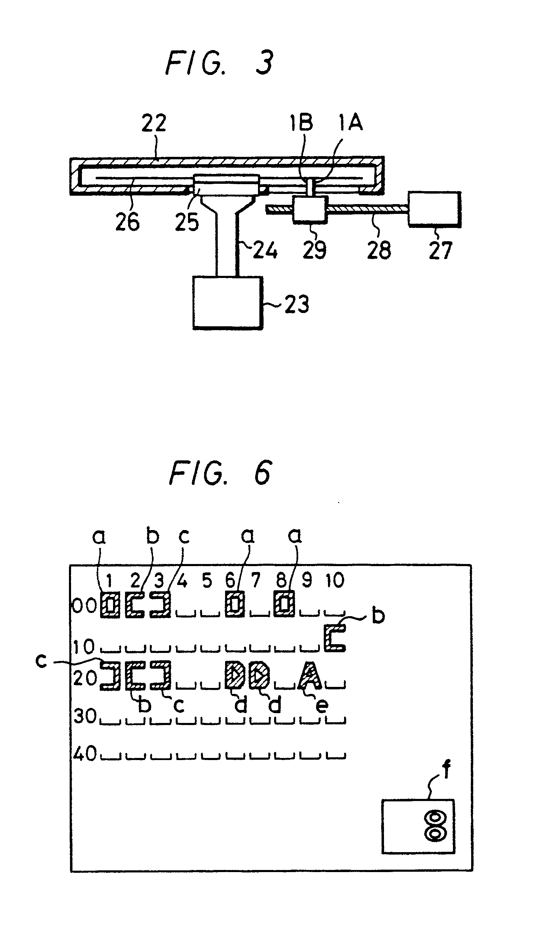

L'appareil d'enregistrement et/ou de reproduction 20 se compose de têtes d'enregistrement et/ou de reproduction 1A et 1B qui sont mobiles toutes deux dans la direction radiale d'un support ou feuille d'enregistrement magnétique en forme de disque 26 (voir figure 3) comportant par exemple 50 pistes d'enregistrement circulaires, concentriques. Un amplificateur d'enregistrement et/ou de reproduction 2 amplifie les signaux enregistrés ou reproduits par les têtes 1A et 1B. Le signal reproduit par l'amplificateur d'enregistrement et/ou de reproduction 2 est traité par un processeur vidéo 3, puis est appliqué à une borne d'entrée d'un additionneur 4 qui additionne ce signal à un signal d'information de piste appliqué à une autre borne d'entrée de l'additionneur 4 par un circuit de commande d'affichage 5 ; le signal est alors affiché sur un tube cathodique 6.

Un détecteur de fréquence radio (RF) 7 sert à détecter le signal RF du signal de sortie reproduit fourni par l'amplificateur d'enregistrement et/ou de reproduction 2. Un détecteur de signal d'identification d'enregistrement (ID) 8 détecte en fonction du signal de sortie du détecteur RF, 7 la nature du signal d'information reproduit d'une ou plusieurs pistes du disque d'enregistrement 26 qui est soit une image vidéo fixe enregistrée comme signal d'information de trame sur une piste ou enregistrée comme signal d'information d'image sur deux pistes adjacentes ou encore comme signal d'information de données numériques ou d'informations audio ou analogues.

Les signaux d'identification du type et de la nature de l'information enregistrée dans chaque piste sont fournis comme signaux de sortie du détecteur de signaux d'enregistrement ID, 8 et sont enregistrés dans une mémoire vive (RAM) 10 en fonction de l'opération de commande effectuée par une unité centrale de traitement (CPU) 9.

Un circuit de commande d'accès de têtes 12 est commandé par l'unité CPU 9 par l'intermédiaire du circuit entrée/sortie I/O, 11. Le circuit de commande d'accès de têtes 12 sert à commander un moteur 27 (figure 3) qui entraîne les têtes d'enregistrement et/ou de reproduction 1A et 1B dans la direction radiale. Un détecteur de position de piste zéro 13 est utilisé pour détecter la piste initiale ou piste zéro à laquelle on accède par les têtes.

Les têtes 1A et 1B sont espacées dans la direction radiale du disque 26 de manière à balayer les pistes adjacentes du disque. Seulement une tête par exemple la tête 1A est mise en oeuvre pour enregistrer ou reproduire un signal d'information sur une seule piste par exemple un signal d'information de trame, un signal d'information audio ou un signal d'information de données numériques. Toutefois lors de l'enregistrement ou de la reproduction d'un signal d'information d'image dans deux pistes adjacentes, on met en oeuvre la tête 1A pendant une rotation du disque 26 et sans changer la position des têtes, on met en oeuvre la tête 1B pendant la rotation suivante du disque d'enregistrement magnétique.

Les programmes servant à commander l'appareil d'enregistrement et/ou de reproduction 20 sont enregistrés de manière préalable dans une mémoire morte (ROM) 14.

Comme représenté à la figure 1, les têtes d'enregistrement et/ou de reproduction 1A et 1B, le circuit-détecteur de position de piste zéro 13 et le circuit de commande d'accès de têtes 12 sont compris dans le moyen d'entraînement 18. En mode d'enregistrement, le signal à enregistrer est appliqué par la borne 19 et l'amplificateur d'enregistrement et/ou de reproduction 2 aux têtes d'enregistrement et/ou de reproduction 1A et 1B.

Le moyen d'entraînement de disque 18 est commandé par l'unité CPU 9 par l'intermédiaire du circuit I/O 11 suivant le bouton de commande de fonction, choisi parmi l'ensemble des boutons de commande 16 (figure 1) sur le panneau avant de l'appareil d'enregistrement et/ou de reproduction 20 comme cela sera détaillé ci-après. De plus, un panneau d'affichage 17 prévu sur le panneau avant de l'appareil d'enregistrement et/ou de reproduction 20 est commandé par l'unité CPU 9 par l'intermédiaire du circuit de commande d'affichage 5.

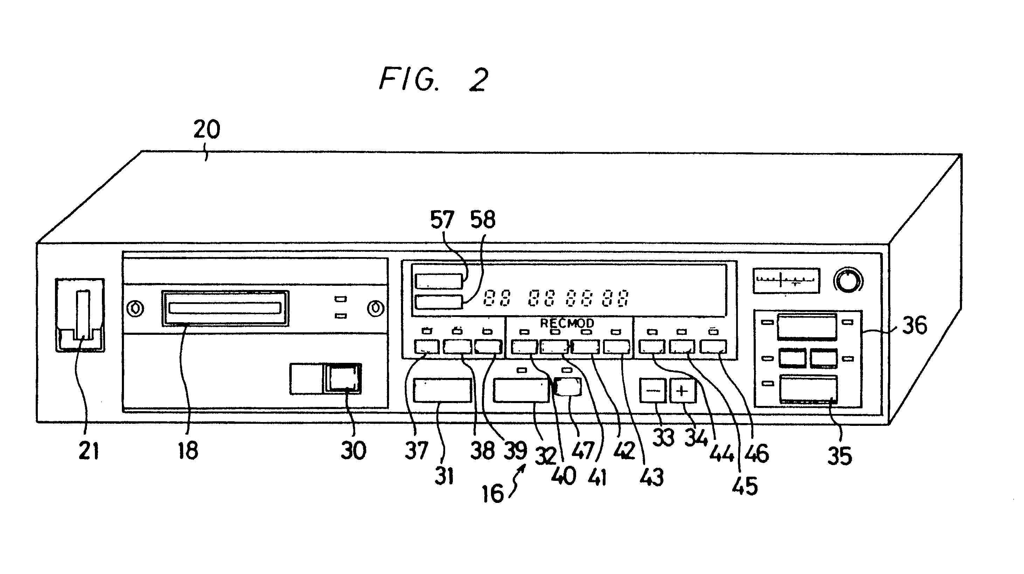

Selon la figure 2, l'appareil d'enregistrement et/ou de reproduction 20 comporte un bouton de marche/arrêt 21 à l'avant du boîtier au voisinage du moyen d'entraînement de disque 18. Comme représenté à la figure 3, le moyen d'entraînement 18 comporte un moteur à broche 23 auquel est couplé un axe 24. Un plateau à disque 25 est fixé à l'axe 24 pour recevoir le disque en forme de feuille magnétique 26 qui reste dans la pochette de disque 22. Un moteur d'accès de têtes 27 déplace les têtes 1A et 1B dans la direction radiale du disque magnétique 26 ; ce moteur est couplé à une vis 28 qui est vissée dans un bloc porte-têtes 29 sur lequel sont prévues les têtes d'enregistrement et/ou de reproduction 1A et 1B.

Selon la figure 2, l'ensemble des boutons de commande 16 est prévu sur le panneau avant de l'appareil d'enregistrement et/ou de reproduction 20 ; cet ensemble comprend un bouton d'éjection (EJECT) 30 que l'on commande pour éjecter la pochette de disque 22 avec le disque magnétique 26 (figure 3) par rapport au moyen d'entraînement de disque 18. L'ensemble de boutons de commande 16 du panneau avant 20 comporte également un bouton d'arrêt (STOP) 31, un bouton de lecture (LEC) 32, des boutons moins (-) et plus ( + ) 33, 34 qui servent à faire avancer et reculer respectivement la tête, un bouton d'enregistrement (REC) 35 et un bouton d'attente (ATT) 36.

Les références numériques 37, 38 et 39 designent des boutons de commande d'affichage respectifs (AFFICHAGE SUR LE TUBE CATHODIQUE). De façon plus particulière, ces boutons de commande d'affichage se composent d'un bouton d'identification (ID) 37, d'un bouton de piste (PISTE) 38 et d'un bouton de recherche ( RECH) 39. Les références numériques 40, 41, 42 et 43 désignent les boutons respectifs utilisés en mode d'enregistrement et comprenant un bouton de trame (TRAME) 40, un bouton d'image (IMAGE) 41,

un bouton de relecture (RELEC.) 42 et un bouton de poursuite (CONT) 43.

En mode d'enregistrement, lorsqu'on a enfoncé le bouton de trame 40, l'information d'enregistrement est enregistrée à la manière d'une trame alors que si l'on enfonce le bouton d'image 41, le signal d'enregistrement est enregistré à la manière d'une image dans deux paires de pistes adjacentes à l'aide des têtes 1A et 1B successivement comme cela a été indiqué précédemment.

Lorsqu'on enfonce le bouton de relecture 42, l'information d'enregistrement de la piste en cours de balayage est retenue et l'appareil commute immédiatement en mode de reproduction ou de lecture pour reproduire le signal enregistré dans cette piste précise. Lorsqu'on actionne le bouton de poursuite 43, la tête 1A enregistre l'information en continu sur des pistes successives jusqu'à ce que l'on libère le bouton 43.

Les références numériques 44, 45 et 46 désignent les boutons de sélection d'entrée comprenant le bouton d'entrée vidéo 44, un bouton d'entrée de signal RGB 45 et un bouton d'entrée de copies 46. La référence numérique 47 désigne un bouton de trame obligatoire (TRAME SEULE) qui est enfoncé si l'utilisateur souhaite lire une image enregistrée à la manière d'une trame même si l'enregistrement a été fait à la manière d'une image. Ainsi, lorsqu'on enfonce le bouton de trame obligatoire (TRAME SEULE) 47, on ne tient pas compte de l' état de la mémoire et l'appareil passe en mode de lecture, toute l'information étant reproduite en mode de reproduction de trame.

En se reportant de nouveau à la figure 1, on voit que le circuit de contrôle de programme 60 est mis en oeuvre par une unité centrale de traitement (CPU) 61 suivant le programme de système inscrit dans une mémoire morte ROM 62. Un programme d'utilisateur peut être enregistré dans une mémoire vive RAM 63 comme cela sera détaillé ci-après. Un ensemble de boutons de commande 64 est prévu sur le panneau avant du circuit de contrôle de programme 60 pour assurer sélectivement les différentes fonctions de celui-ci. De plus, il est prévu un panneau d'affichage 66 sur le panneau avant ; celui-ci est commandé par l'unité CPU 61 par l'intermédiaire d'un circuit de commande d'affichage 65. L'appareil d'enregistrement et/ou de reproduction 20 et le circuit de contrôle de programme 60 sont couplés électriquement par un interface à bus 67 faisant partie d'un câble.

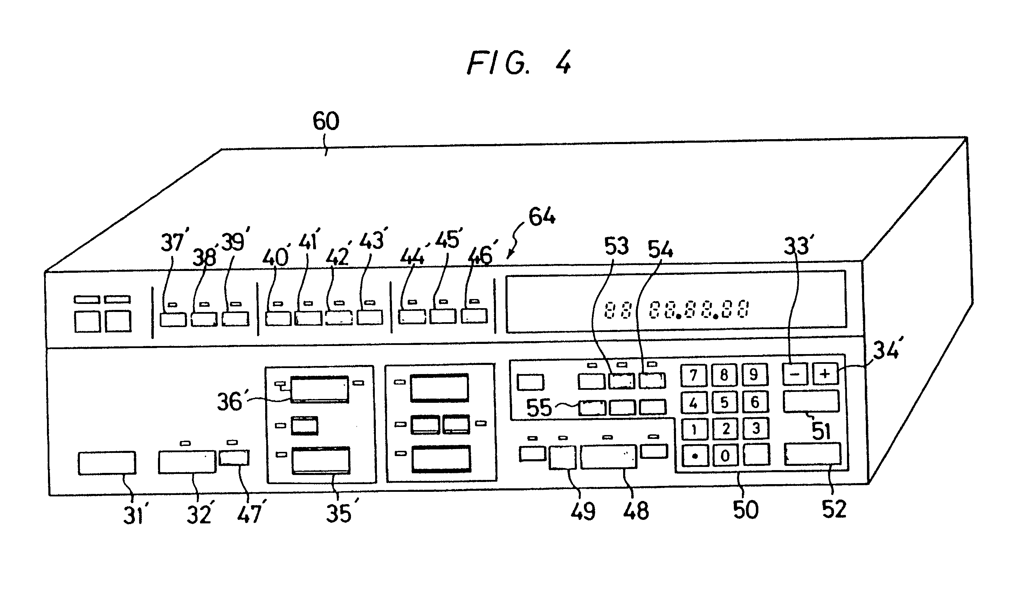

Comme représenté à la figure 4, l'ensemble des boutons de commande 64 du panneau avant du circuit de contrôle de programme 60 comprend un bouton d'arrêt (STOP) 31', un bouton d'affichage (AFF.) 32', un bouton moins (-) 33,, un bouton plus ( + ) 34', un bouton d'enregistrement (REC) 35', un bouton d'attente (ATT.) 36', un bouton d'identification (ID) 37', un bouton de piste (PISTE) 38', un bouton de recherche (RECH.) 39', un bouton de trame (TRAME) 40', un bouton d'image (IMAGE) 41', un bouton de relecture (RELEC.) 42', un bouton de poursuite (CONT) 43', un bouton d'entrée vidéo (VIDEO) 44', un bouton d'entrée RGB 45', un bouton de copies (DUB) 46', un bouton de trame obligatoire (TRAME SEULE) 47'. Ces boutons 31'-47' ont exactement les mêmes fonctions que les boutons portant les numéros correspondants 31 à 47 décrits ci-dessus en liaison avec le panneau de l'appareil 20 de la figure 2.

Il est de plus prévu sur le panneau du circuit de contrôle de programme 60 un bouton d'exécution de programme (EXECUTION) 48, un bouton de retour de pas (PAS EN RETOUR) 49 qui est utilisé pour commander pas à pas le retour du programme, un ensemble de touches formé de dix touches 50, un bouton d'accès direct à la tête (GO TO) 51 et un bouton d'entrée (ENTRER) 52 servant à inscrire le programme défini par l'utilisateur.

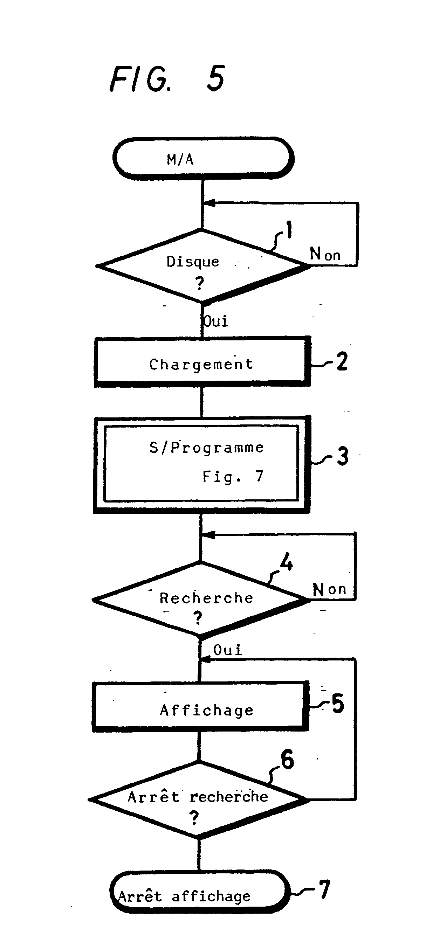

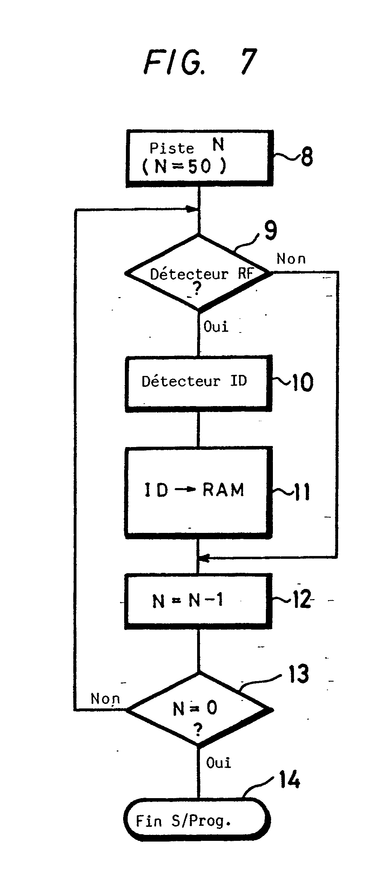

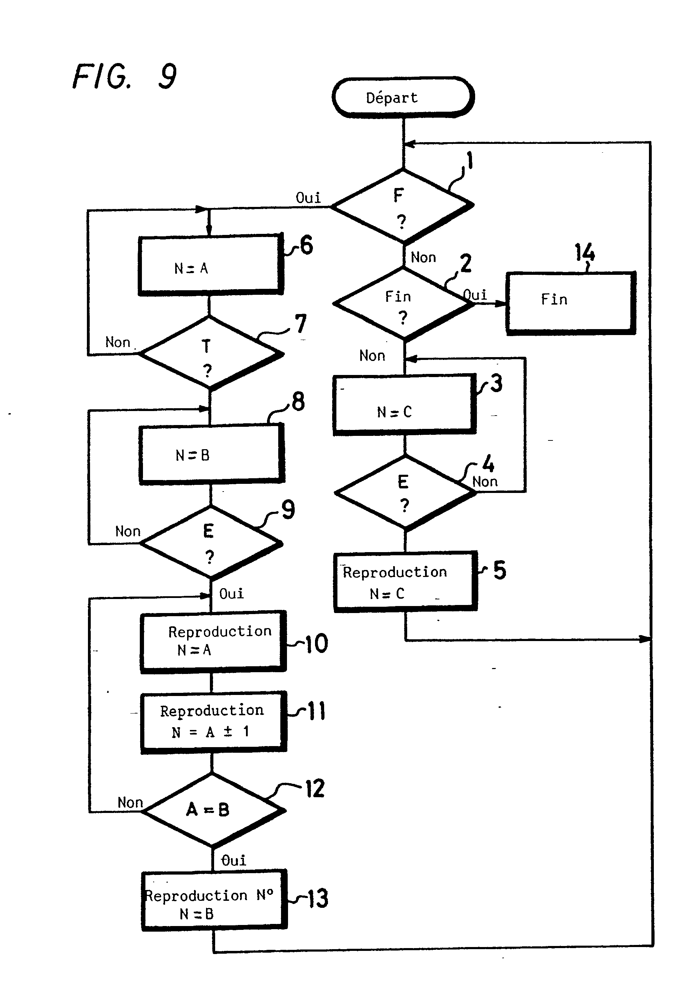

Le fonctionnement de l'appareil d'enregistrement et/ou de reproduction 20 sera décrit ci-après en supposant que l'on ignore si le disque magnétique 26 a été ou non utilisé précédemment. Si le disque magnétique 26 a déjà été utilisé, il est souhaitable de connaître le type ou la nature des informations enregistrées sur celui-ci et s'il reste une ou plusieurs pistes vides pour enregistrer une information complémentaire. De plus comme représenté dans l'ordinogramme de la figure 5, initialement, on branche l'alimentation en actionnant le bouton marche/arrêt 21 (figure 2) de l'appareil d'enregistrement et/ou de reproduction 20. Puis, à l'étape 1, on détecte si la pochette de disque 22 a été introduite dans le moyen d'entraînement de disque 18 (figure 2). S'il n'y a pas de pochette de disque 22 dans le moyen d'entraînement de disque 18, on répète l'étape 1. Lorsqu'une pochette de disque 22 est introduite dans le moyen d'entraînement de disque 18, le programme passe à l'étape 2 au cours de laquelle le disque 26 de la pochette 22 est chargé sur le plateau 25 du moyen d'entraînement 18 de l'appareil d'enregistrement et/ou de reproduction 20. Après le chargement du disque 26, le programme passe à l'étape 3 pour mettre en oeuvre le sous-programme décrit ci-après à l'aide de la figure 7 et selon lequel on recherche automatiquement en général un signal RF, puis on détecte le signal RF à l'aide du détecteur 7 et on détermine la nature et le type d'informations enregistrées à l'aide du détecteur de signal d'enregistrement ID, puis on enregistre le signal dans la mémoire RAM 10.

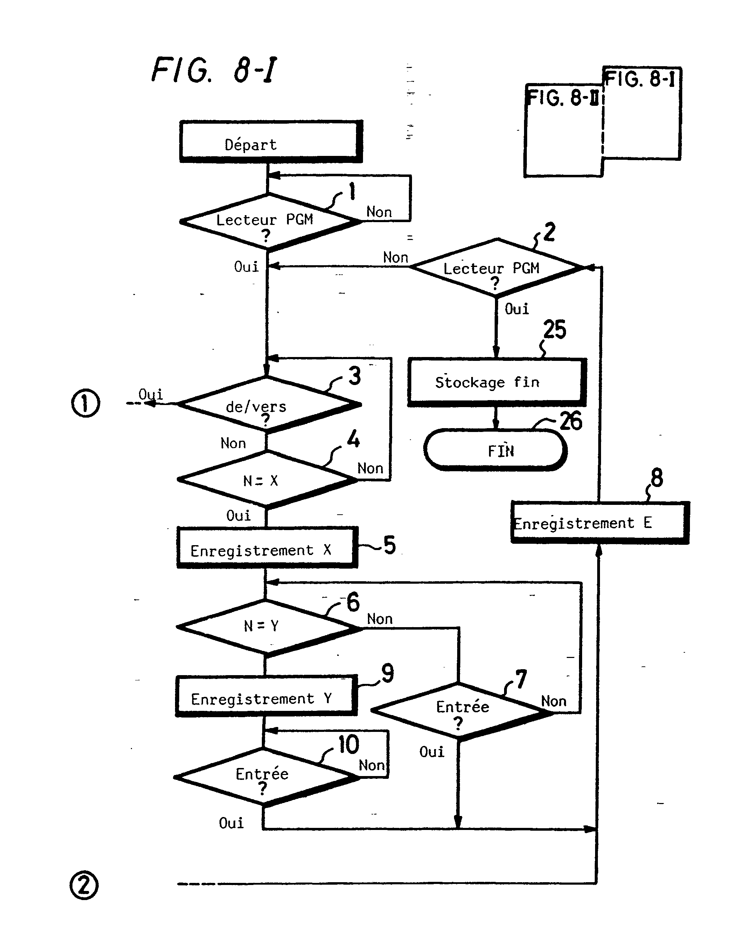

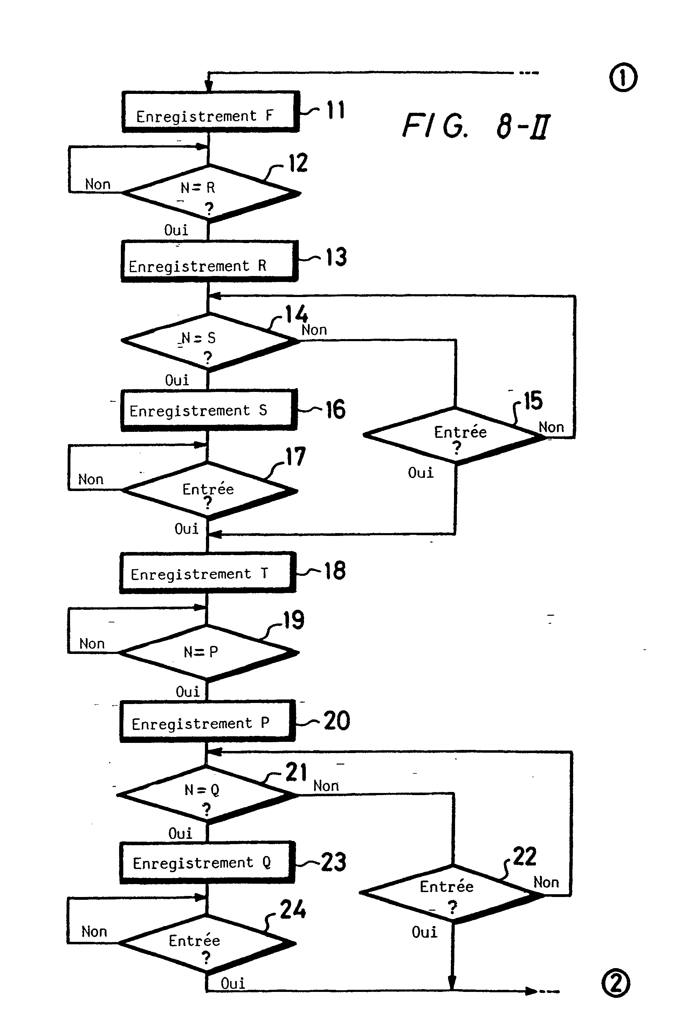

Au cours de l'étape suivante 4, on détecte l'enfoncement du bouton de recherche 39 (figure 2). Si le bouton de recherche 39 n'est pas enfoncé, l'étape 4 est répétée. Si le bouton de recherche 39 est enfoncé, le programme passe à l'étape 5 au cours de laquelle l'information ID enregistrée dans la mémoire RAM 10 est lue sous la commande de l'unité CPU 9 et est affichée sur le tube cathodique 6 (figure 1) comme cela est représenté à la figure 6. Selon la figure 6, chaque symbole a représente une piste sur laquelle a été enregistrée une information de trame. Ainsi dans l'exemple représenté à la figure 6, une information de trame est enregistrée sur la première, la sixième et la huitième piste. En d'autres termes, chacune des pistes ainsi énoncées contient un signal vidéo correspondant à une trame.

Les symboles b et c représentent respectivement les pistes sur lesquelles a été enregistrée une information d'image. En d'autres termes, un signal vidéo d'une image (c'est-à-dire de deux trames) est enregistré dans deux pistes adjacentes du disque 26 par les têtes 1A et 1B respectives travaillant successivement sans mouvement du bloc porte-têtes 29. Dans l'exemple représenté à la figure 6, on a une information d'image enregistrée dans les pistes regroupées par paires à savoir les deuxième et troisième pistes, les vingt et vingt et unième pistes, les vingt-deux et vingt-troisième pistes. Le symbole d représente une piste sur laquelle a été enregistré un signal d'information numérique ; le symbole e représente une piste sur laquelle a été enregistrée une information audio. Ainsi dans l'exemple de la figure 6, une information de données numériques est enregistrée dans les pistes n° 26 et 27 ; une information audio est enregistrée dans la piste n° 29 ; toutes les autres pistes sont vides c'est-à-dire qu'il s'agit de pistes sur lesquelles rien n'a été enregistré.

Selon l'ordinogramme de la figure 5, après l'affichage de l'information ID au cours de l'étape 5, on détecte à l'étape 6 si le bouton de recherche 39 a été ou non libéré. Si le bouton de recherche 39 n'est pas libéré, l'étape 5 est répétée c'est-à-dire que l'affichage de l'information ID sur le tube cathodique 6 se poursuit. Si le bouton de recherche 39 a été libéré, le programme passe à l'étape 7 à laquelle l'affichage sur le tube cathodique 6 se termine.

Selon la figure 7, au cours du sous-programme de l'étape 3 de la figure 5, on désigne une piste prédéterminée N par exemple la piste n° 50 à l'étape 8. Puis, le détecteur RF 7 (figure 1) détermine à l'étape 9 si un signal RF est ou non enregistré dans la piste n° 50. Si un signal RF est enregistré, le programme passe à l'étape 10 au cours de laquelle le détecteur de signal d'enregistrement ID 8 détermine si le signal RF est une information de trame, une information d'image, une information de données numériques, une information audio ou analogue. Puis à l'étape 11, la donnée identifiant le type d'informations enregistrées dans la piste 50 c'est-à-dire le signal ID est enregistrée dans la mémoire RAM 10 (figure 1) sous la commande de l'unité CPU 9 (figure 1).

Puis, le programme passe à l'étape 12 qui désigne la piste suivante N = N-1, c'est-à-dire la piste n° 49. Il est clair que si au cours de l'étape 9, on a constaté qu'aucun signal RF n'était enregistré dans la piste n° 50, le programme passerait immédiatement à l'étape 12. Puis, le programme passe à l'étape 13 au cours de laquelle on vérifie si la relation N = 0 est ou non établie, c'est-à-dire si l'on se trouve à la piste n° zéro. Si la relation N = 0 n'est pas vérifiée, le programme revient à l'étape 9 pour répéter les opérations décrites ci-dessus. Si N = 0 est vérifié, c'est-à-dire si toutes les pistes allant de la piste n° 50 à la piste n° 1 ont été contrôlées pour y vérifier la présence de l'enregistrement d'un signal RF, le programme passe à l'étape 14 à laquelle se termine le sous-programme.

Si le bouton ID 37 (figure 2) est enfoncé, l'appareil étant en mode d'enregistrement ou en mode d'attente, le signal IF identifiant le type d'informations à enregistrer est affiché comme symbole respectif sur l'écran d'affichage 6 (figure 1). En mode de reproduction ou de lecture, la mise en oeuvre du bouton ID 37 entraîne que le signal ID correspondant à l'information enregistrée dans la piste du disque magnétique 26 à reproduire est affiché sur l'écran d'affichage 6. De plus, si le bouton de piste 38 (figure 2) est enfoncé, qu'il s'agisse du mode d'enregistrement, du mode d'attente ou du mode de lecture, le nombre de pistes balayées par la tête 1A ou 1B mise en oeuvre est affiché sur l'écran d'affichage 6 comme cela est indiqué en f à la figure 6. Il est clair que si le bouton de recherche 39 (figure 2) est enfoncé, les résultats recherchés c'est-à-dire les symboles indiquant les types d'informations, le cas échant, enregistrés dans toutes les pistes sont affichés simultanément sur l'écran 6 comme décrit ci-dessus.

La procédure normale de mise en oeuvre du mode d'enregistrement sera décrite ci-après en référence aux figures 1 à 4. Initialement on enfonce le bouton du commutateur d'alimentation 21 et on introduit la pochette de disque 22 dans le moyen d'entraînement 18. Une fois la pochette 22 introduite dans le moyen d'entraînement 18, les signaux RF enregistrés sur une ou plusieurs pistes sont recherchés automatiquement et l'information relative aux pistes vides est enregistrée dans la mémoire 10. Puis, celle des têtes 1A ou 1B qui travaille est déplacée jusqu'à l'adresse de la piste à laquelle l'information doit être enregistrée. Pour déplacer la tête d'une piste à la fois en direction de la périphérie intérieure du disque magnétique 26, on enfonce le bouton plus 34 une fois pour chaque piste alors que pour déplacer la tête d'une piste à la fois dans la direction inverse vers la périphérie extérieure du disque 26, on enfonce le bouton moins 33 une fois pour chaque piste. Lorsque le mouvement vers la piste d'enregistrement est terminé, si l'on enfonce le bouton d'attente 36, l'appareil d'enregistrement et/ou de reproduction 20 passe en mode d'attente. Puis, si l'on enfonce le bouton d'enregistrement 35, l'appareil d'enregistrement et/ou de reproduction 20 passe en mode d'enregistrement. A la fin de l'enregistrement choisi, si l'on enfonce le bouton d'arrêt 31, cela libère le mode d'attente. Si l'on actionne le bouton de lecture 32, l'appareil d'enregistrement et/ou de reproduction 20 passe directement en mode de lecture. Si l'on enfonce le bouton d'éjection 30, la pochette de disque 22 et le disque 26 qu'elle contient sont éjectés du moyen d'entraînement 18.

La procédure de mise en oeuvre du mode de reproduction sera décrite ci-après. Tout d'abord, on enfonce le bouton commutateur d'alimentation 21 et on introduit la pochette de disque 22 dans le moyen d'entraînement 18. Puis, on actionne le bouton de lecture 32 et ainsi l'appareil d'enregistrement et/ou de reproduction 20 passe en mode de lecture pour reproduire l'information enregistrée dans la piste au niveau de laquelle se trouve précisément la tête ; un voyant de lecture (non représenté) s'éclaire. A la reproduction d'une piste sur laquelle est enregistrée une information de trame, un voyant de trame 57 (figure 2) s'éclaire pour indiquer cela alors que si une information d'image est reproduite par les têtes 1A et 1B successivement d'une paire de pistes adjacentes, un voyant d'image 58 s'éclaire. En mode de reproduction, les voyants 57 et 58 sont commutés automatiquement par le signal ID respectif contenu dans le signal RF reproduit d'une piste. La tête peut passer d'une piste à une autre piste à reproduire. Lorsque le bouton plus 34 ou le bouton moins 33 est enfoncé en continu, la tête se déplace à une vitesse prédéterminée par piste jusqu'à la première piste dans laquelle est enregistrée une information, puis la tête-passe sur la seconde piste et les pistes suivantes contenant l'information enregistrée, et cela à une vitesse prédéterminée plus élevée que la vitesse de déplacement de la première piste, ce qui permet de faire une recherche d'image sur l'écran-image ou l'écran vidéo du tube cathodique 6.

A la fin de la reproduction ou de la lecture souhaitée, on enfonce le bouton d'arrêt 31 peur passer en mode d'arrêt ; à ce moment, le moteur 23 de la broche est au repos et les têtes sont dégagées du contact avec le disque magnétique 26.

La description ci-après concerne la mise en oeuvre de la lecture programmée à l'aide du contrôleur de programme 60. En premier lieu, on passe sur le programme de lecture qui est représenté par l'ordinogramme de la figure 8 ; on initialise ce programme en enfonçant momentanément un bouton de lecture de programme (LECTURE PGM) 53 du contrôleur de programme 60 (figure 4). L'unité CPU 61 détecte l'étape 1 si le bouton de lecture de programme 53 a été enfoncé. Si le bouton de lecture de programme 53 n'a pas été enfoncé, l'étape 1 est répétée. Si le bouton de lecture de programme 53 a été enfoncé, le programme passe sur l'étape 3 à laquelle l'unité CPU 61 (figure 1) vérifie un bouton vers/à partir de (VERS/A PARTIR DE) 55 a été enfoncé (figure 4). Si le bouton 55 n'a pas été enfoncé, le programme passe sur l'étape 4 à laquelle l'unité CPU 61 vérifie si un numéro de piste X a été choisi par la mise en oeuvre sélective des touches 50 (figure 4). Si aucune des touches 50 n'a été enfoncée, le programme revient à l'étape 3. Si au contraire une ou plusieurs touches 50 ont été enfoncées, le numéro de piste X correspondant est enregistré dans la mémoire RAM 63 (figure 1) à l'étape 5.

Puis le programme passe à l'étape 6 à laquelle l'unité CPU 61 vérifie si un numéro de piste Y a été défini par la mise en oeuvre sélective des touches 50 (figure 4 ). Si aucune touche 50 n'a été enfoncée, le programme passe sur l'étape 7 à laquelle l'unité CPU 61 vérifie que le bouton d'entrée 52 a été enfoncé. Si le bouton d'entrée 52 n'a pas été enfoncé, le programme revient à l'étape 6. Si le bouton d'entrée 52 a été enfoncé, la lettre E indiquant que le bouton d'entrée 52 a été enfoncé, est enregistrée dans la mémoire vive RAM 63 (figure 1) à l'étape 8, puis le programme passe sur l'étape 2 ; à ce moment, l'unité CPU 61 vérifie si le bouton de lecture de programme 53 (LECTURE PGM) a de nouveau été enfoncé pour signifier la fin du programme. Si le bouton de lecture de programme 53 n'a pas été de nouveau enfoncé, le programme revient à l'étape 3. En d'autres termes, la série d'opérations représentée par les étapes 3 à 8 constitue un programme pour effectuer un accès de piste aléatoire et par lequel une certaine piste identifiée par le nombre X à un chiffre est mise à l'état et est enregistrée dans la mémoire vive RAM 63.

Cependant si à l'étape 6, le numéro de piste Y est désigné par une commande appropriée de touches 50, le numéro de piste Y est enregistré dans la mémoire RAM 63 (figure 1) à l'étape 9. Puis à l'étape 10, l'unité CPU 61 vérifie si le bouton d'entrée 52 est enfoncé. Si le bouton d'entrée 52 n'a pas été enfoncé, l'étape 10 est répétée jusqu'à ce que ce bouton ait été enfoncé. Lorsqu'on enfonce le bouton 52, le programme passe à l'étape 8 à laquelle la lettre E indiquant l'enfoncement du bouton 52 est enregistrée dans la mémoire RAM 63, puis le programme revient à l'étape 2. C'est pourquoi, le fait que le programme traverse les étapes 6, 9 et 10 signifie que les nombres X et Y représentent un numéro de piste à deux chiffres ont été faits au cours de l'établissement du programme.

Si le bouton vers/à partir de 55 a été enfoncé, à l'étape 3, la lettre F indiquant le premier mot de "vers/à partir de" est enregistrée dans la mémoire RAM 63 à l'étape 11. Puis le programme passe à l'étape 12 à laquelle l'unité CPU 61 vérifie qu'un numéro de piste R est choisi par la mise en oeuvre appropriée des touches 50. Si les touches n'ont pas été enfoncées pour sélectionner un numéro de piste R, l'étape 12 est répétée. Si le numéro de piste R est choisi par la mise en oeuvre des touches 50, ce numéro de piste R est enregistré dans la mémoire RAM 63 à l'étape 13.

Puis le programme passe à l'étape 14 à laquelle l'unité CPU 61 vérifie qu'un numéro de piste S a été sélectionné par la mise en oeuvre appropriée de touches 50. S'il n'y a pas de numéro de piste S sélectionné, le programme passe à l'étape 15 à laquelle l'unité CPU 61 vérifie que le bouton d'entrée 52 a été enfoncé. Si le bouton d'entrée 52 n'a pas été enfoncé, le programme revient à l'étape 14. Par contre si le bouton d'entrée 52 a été enfoncé, le programme passe à l'étape 18 à laquelle la lettre T qui indique le dernier mot de "vers/à partir de" est enregistrée dans la mémoire vive RAM 63. En d'autres termes, dans la série d'opérations allant des étapes 11 à 18, un certain numéro de piste formé d'un seul chiffre R est désigné comme point de départ de l'opération "vers/à partir de" au cours de l'établissement d'un programme concernant un accès continu à une piste.

Si le numéro de piste S a été sélectionné par la mise en oeuvre des touches 50 à l'étape 14, le numéro de piste S est enregistré dans la mémoire RAM 63 à l'étape 16. Puis à l'étape 17, l'unité CPU 61 vérifie que le bouton d'entrée 52 a été enfoncé. Si le bouton d'entrée 52 n'a pas été enfoncé, l'étape 17 est répétée. Si par contre le bouton d'entrée 52 a été enfoncé, le programme passe à l'étape 18 à laquelle la lettre T qui indique la fin de "vers/à partir de" est enregistrée dans la mémoire RAM 63. En d'autres termes au cours de l'exécution du programme à travers les étapes 14, 16 et 17, une piste identifiée par deux chiffres ou nombres R et S est identifiée comme point de départ de l'opération voulue "vers/à partir de" ou d'une série continue de pistes à lire en séquence.

Puis, le programme passe à l'étape 19 à laquelle l'unité CPU 61 vérifie qu'un numéro de piste P a été choisi par la commande sélective des touches 50. Si le numéro de piste P n'a pas été choisi, l'étape 17 est répétée. Si au contraire les touches 50 ont été actionnées sélectivement, le numéro de piste respectif P est enregistré dans la mémoire RAM 63 à l'étape 20. Puis, le programme passe à l'étape 21 à laquelle l'unité CPU 61 vérifie qu'un numéro de piste Q a été choisi par la commande sélective des touches 50. Si un numéro de piste Q n'a pas été choisi, le programme passe à l'étape 22 à laquelle l'unité CPU 61 vérifie que le bouton d'entrée 52 a été enfoncé. Si le bouton d'entrée 52 n'a pas été enfoncé, le programme revient à l'étape 21. Si au contraire, le bouton d'entrée 52 a été enfoncé, le programme revient à l'étape 8 mentionnée ci-dessus. A l'étape 8, la lettre E indiquant que le bouton d'entrée 52 a été enfoncé, est enregistrée dans la mémoire RAM 63, puis le programme revient à l'étape 2. En d'autres termes, les opérations allant des étapes 19 à 22 définissent un certain numéro de piste P formé d'un seul chiffre comme point final pour le programme "vers/à partir de" pour accéder en continu aux pistes.

Si un numéro de piste Q est choisi par la commande sélective des touches 50 à l'étape 21, le numéro de piste Q est enregistré dans la mémoire RAM 63 à l'étape 23. Puis, le programme passe à l'étape 24 à laquelle l'unité CPU 61 vérifie que le bouton d'entrée 52 a été enfoncé. Si le bouton d'entrée 52 n'a pas été enfoncé, l'étape 24 est répétée. Au contraire, si le bouton d'entrée 52 a été enfoncé, le programme passe à l'étape 8. C'est pourquoi les opérations correspondant aux étapes 21, 23 et 24 définissent un numéro de piste particulier formé de deux chiffres ou nombres P et Q comme point final du programme "vers/à partir de " dans lequel on accède en continu aux pistes, l'une après l'autre.

Enfin, le programme revient à l'étape 2 à laquelle si le bouton de lecture de programme (LECTURE PGM) 53 (figure 4) est de nouveau enfoncé, cela indique la fin du programme de lecture défini par l'utilisateur et le programme passe sur l'étape 25. A l'étape 25, un repère FIN indiquant que le bouton de lecture de programme 53 a de nouveau été enfoncé, c'est-à-dire indiquant la fin du programme de lecture de l'utilisateur, est enregistré dans la mémoire RAM 63 et les opérations de définition de ce programme sont terminées.

A titre d'exemple, les opérations pour créer un programme de lecture mélangé dans lequel les numéros de piste répartis de façon aléatoire "5", "17" et "12", les numéros de piste séquentiels "13" ... "25" et les numéros de piste répartis de manière aléatoire "30", "45" et "1" sont à lire ou à reproduire dans cet ordre, seront décrites en référence à l'ordinogramme de la figure 8. Après avoir parcouru les étapes 1 et 3, le programme passe à l'étape 4 à laquelle l'une des touches 50 correspondant au numéro de piste "5" est enfoncée ; puis à l'étape 5, le chiffre "5" est enregistré dans la mémoire RAM 63. Comme il n'y a pas de numéro de piste de désigner à l'étape 6, le programme passe à l'étape 7 à laquelle le bouton d'entrée 52 est enfoncé et la lettre E est enregistrée dans la mémoire RAM 63 à l'étape 8 ; puis, le programme revient à l'étape 2. Comme le bouton de lecture de programme 53 n'est pas de nouveau enfoncé à ce moment, le programme passe de l'étape 3 à l'étape 4 et à ce moment l'actionnement de l'une des touches 50 correspondant au numéro "1" est détecté, ce qui correspond au second chiffre du numéro de piste "17" et à l'étape 5 le chiffre "1" est enregistré dans la mémoire RAM 63. De plus, celle des touches 50 qui représente le chiffre "7" a été enfoncée à l'étape 6, ce qui correspond au premier chiffre du numéro de piste "17" et à l'étape 9, le chiffre "7" est mis dans la mémoire RAM 63. A l'étape 10, on actionne le bouton d'entrée 52 de manière à enregistrer la lettre "E" dans la mémoire RAM 63 ; puis, le programme revient à l'étape 2. Des opérations analogues sont exécutées pour introduire le numéro de piste "12" dans la mémoire 63.

A la suite de cela, on actionne le bouton "vers/à partir de" 55 à l'étape 3 et la lettre F est enregistrée dans la mémoire RAM 63 à l'étape 11. A l'étape 12, la touche 50 qui représente le chiffre "1" est enfoncée pour désigner le second chiffre du numéro de piste "13" et le chiffre "1" est enregistré dans la mémoire RAM 63 à l'étape 13 . De plus à l'étape 14, la touche 50 qui représente le numéro "3" est enfoncée de manière à désigner le premier chiffre du numéro de piste "13" ; le chiffre "3" est enregistré dans la mémoire RAM 63 à l'étape 16. A l'étape 17, le bouton d'entrée 52 est actionné et à l'étape 18 la lettre T est enregistrée dans la mémoire RAM 63.

Puis à l'étape 19, la touche 50 qui représente le numéro "2" est enfoncée pour désigner le second chiffre du numéro de piste "25" ; à l'étape 20, le chiffre "2" est enregistré dans la mémoire RAM 63. A l'étape 21, la touche 50 qui représente le chiffre "5" est enfoncée pour désigner le premier chiffre du numéro de piste "25" ; ce chiffre "5" est enregistré dans la mémoire RAM 63 à l'étape 23. A l'étape 24, on actionne le bouton d'entrée 52 et à l'étape 8 on enregistre la lettre E dans la mémoire RAM 63 ; le programme revient à l'étape 2.

A l'étape 4, on enfonce la touche 50 représentant le chiffre "3" pour désigner le second chiffre du numéro de piste "30" ; ce chiffre "3" est enregistré dans la mémoire RAM 63 à l'étape 5. A l'étape 6, la touche 50 qui représente le chiffre "0" est enfoncée pour désigner la premier chiffre du numéro de piste "30" et à l'étape 9, le chiffre "0" est enregistré dans la mémoire RAM 63. A l'étape 10, on actionne le bouton d'entrée 52 et à l'étape 8 la lettre E est enregistrée dans la mémoire RAM 63. A la suite de cela, le programme revient à l'étape 2.

Des opérations similaires sont effectuées pour les numéros de piste "45" et "1". A la suite de cela à l'étape 2, on actionne de nouveau le bouton de lecture de programme 53 pour désigner la fin du programme et à l'étape 25 le repère FIN est enregistré dans la mémoire RAM 63 ; les opérations de programmation sont alors terminées.

Ainsi le registre de programme (non représenté) de la mémoire RAM 63 contient les données représentant le programme de lecture défini par l'utilisateur [5E17E12EF13T25E30E45E1E FIN] c'est-à-dire le programme mélangé créé comme indiqué ci-dessus.

L'exécution du programme de lecture, mélangé, décrit ci-dessus, enregistré dans la mémoire RAM 63 sera décrite ci-après en référence à l'ordinogramme de la figure 9. Après le démarrage du programme à l'étape 1, l'unité CPU 62 vérifie que le programme de lecture défini par l'utilisateur démarre sur F c'est-à-dire qu'il vérifie si le programme demande initialement l'accès continu aux pistes. Dans la négative, le programme passe à l'étape 2 à laquelle l'unité CPU 61 vérifie que l'on est à FIN ou que cela est détecté dans le programme enregistré. Si FIN n'a pas été détecté, le programme passe à l'étape 3 à laquelle le numéro de piste C par exemple le numéro de piste "5" de l'exemple décrit ci-dessus est mis à l'état. A l'étape 4, l'unité CPU 61 vérifie si E suit le numéro de piste "5". Si E n'est pas détecté à l'étape 4, le programme revient à l'étape 3. Si par ailleurs E est détecté, le programme passe à l'étape 5 à laquelle le moteur d'accès de têtes 27 est mis en oeuvre de manière appropriée pour accéder au numéro de piste "5" et l'information enregistrée sous le numéro de piste "5" est reproduite en mode de lecture de programme, en retour.

Après la lecture de l'information enregistrée sous le numéro de piste C, le programme revient à l'étape 1 et les opérations décrites en relation aux étapes 2-5 sont répétées pour les numéros de piste "17" et "12". On a ainsi l'exécution séquentielle de la lecture programmée des pistes choisies de manière aléatoire "5", "17" et "12".

Après la lecture de la piste "12", lorsque la lettre F est détectée à l'étape 1, le programme passe à l'étape 6. A l'étape 6, le numéro de piste du programme de lecture défini par l'utilisateur et qui constitue le point de départ de "vers/à partir de " ou l'accès continu aux pistes c'est-à-dire le numéro de piste "13" de l'exemple décrit ci-dessus est mis à l'état. De façon plus précise, le chiffre "1" qui correspond au second chiffre du numéro de piste "13" est d'abord mis à l'état au cours de l'étape 6. Puis au cours de l'étape 7, l'unité CPU 61 vérifie que la lettre T est détectée ensuite dans le programme. Si cette lettre n'est pas détectée, le programme revient à l'étape 6 à laquelle le numéro "3" correspondant au premier chiffre du numéro de piste "13" est mis à l'état, de sorte que le numéro complet de piste "13" est finalement mis.

Si par ailleurs la lettre T est détectée à l'étape 7, le programme passe à l'étape 8 à laquelle le numéro de piste du programme défini par l'utilisateur constitue le point final de "vers/à partir de" ou de l'accès continu aux pistes c'est-à-dire que le numéro de piste "25" est mis à l'état. De façon plus précise dans ce cas, le chiffre "2" qui correspond au second chiffre du numéro de piste "25" est d'abord mis au cours de l'étape 8, puis à l'étape 9, l'unité CPU 61 vérifie que le chiffre "2" est suivi par E. Si au cours de l'étape 9, la lettre E n'est pas détectée, le programme revient à l'étape 8 à laquelle le chiffre "5" qui correspond au premier chiffre du numéro de piste "25" est mis. Ainsi finalement on a le numéro de piste "25".

Lorsque E est détecté au cours de l'étape 9, l'information enregistrée sous le numéro de piste A c'est-à-dire le numéro de piste "13" est reproduite à l'étape 10.

A la fin de la lecture du numéro de piste A c'est-à-dire du numéro de piste "13", le programme passe à l'étape 11 à laquelle l'information enregistrée dans la piste suivante de "vers/à partir de" ou de l'accès en continu aux pistes, est reproduite. De façon plus particulière à l'étape 11, on accède au numéro de piste A±1 c'est-à-dire que l'on reproduit l'information enregistrée dans le numéro de piste "14". A l'étape 11, l'utilisation des symboles "+" et "-" indique que le "vers/à partir de" peut être dans le sens des chiffres croissants ou dans le sens des chiffres décroissants. A l'étape 12, l'unité CPU 61 vérifie que l'égalité A = B est établie c'est-à-dire l'unité vérifie si ou non la piste qui est en cours de lecture est la piste finale de "vers/à partir de" ou de l'accès continu aux pistes dans le programme de lecture défini par l'utilisateur. Si'il ne s'agit pas de la dernière piste, le programme revient à l'étape 10 et les opérations décrites ci-dessus sont répétées. Ainsi dans l'exemple donné ci-dessus, l'information enregistrée sous les numéros de piste "13", "14", "15" ... "25" est reproduite en séquence. Lorsqu'à l'étape 12, on arrive à l'égalité A = B c'est-à-dire si le numéro de piste que l'on a est le numéro de piste "25", le programme passe à l'étape 13. A l'étape 13, l'information enregistrée sous le numéro de piste B c'est-à-dire le numéro de la piste finale "25" est reproduite et à la fin le programme revient à l'étape 1.

Puis, pour les pistes portant les numéros "30", "45'" et "1" et qui suivent la période d'accès en continu aux pistes, on exécute des opérations analogues à celles décrites pour les pistes portant les numéros "5", "17" et "12" ci-dessus. Lorsque finalement on détecte FIN à l'étape 2, le programme passe à l'étape 14 à laquelle se termine l'exécution du programme d'utilisateur tel que décrit.

Il est à remarquer que le contrôleur de programme 60 présente différentes fonctions de travail qui sont intéressantes pour l'utilisateur et parmi lesquelles le fonction la plus significative sera décrit ci-après.

De façon plus particulière si pour une raison quelconque on veut revenir à la lecture de la piste précédente au cours du programme de lecture choisi par l'utilisateur, on actionne le bouton de retour de pas 49 (figure 4) et en réponse à cette commande, la lecture du programme de lecture choisi par l'utilisateur est interrompue et le programme revient d'une longueur prédéterminée de manière à pouvoir chercher ou localiser immédiatement la piste voulue.

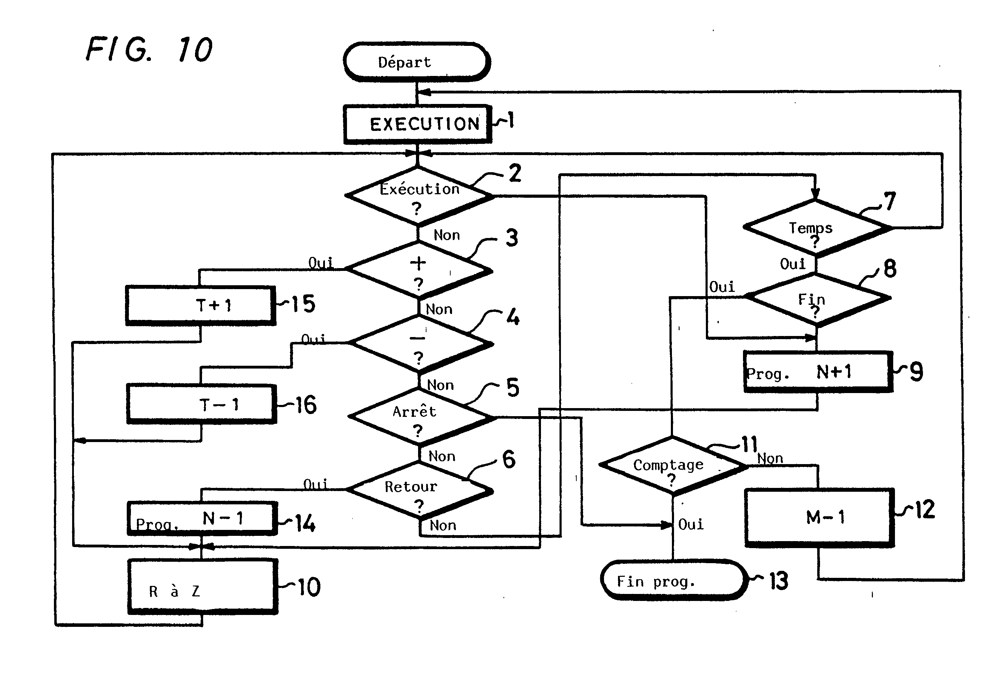

L'opération décrite ci-dessus sera explicitée en référence à l'ordinogramme de la figure 10 ; selon cette figure, après le démarrage du programme, son exécution est initialisée par la mise en oeuvre du bouton d'exécution de programme 48 à l'étape 1. Puis à l'étape 2, l'unité CPU 61 détecte si le bouton d'exécution 48 (figure 4) a été enfoncé. Si le bouton d'exécution 48 n'a pas été enfoncé, le programme passe à l'étape 3 à laquelle l'unité CPU 61 vérifie si le bouton plus 34' (figure 4) a été enfoncé. Si le bouton plus 34' n'a pas été enfoncé, le programme passe à l'étape 4 à laquelle l'unité CPU 61 vérifie que le bouton moins 33' (figure 4) a été enfoncé. Si le bouton moins 33' n'a pas été enfoncé, le programme passe à l'étape 5 à laquelle l'unité CPU 61 vérifie si le bouton arrêt 31' (figure 4) a été enfoncé. Si le bouton arrêt 31' n'a pas été enfoncé, le programme passe à l'étape 6 à laquelle l'unité CPU 61 vérifie si le bouton de retour de pas 49 a été enfoncé (figure 4). Si le bouton de retour de pas 49 n'a pas été enfoncé, le programme passe à l'étape 7 à laquelle l'unité CPU 61 vérifie si une horloge d'intervalle (non représentée) appartenant à l'unité CPU 61 a indiqué l'écoulement d'un intervalle de temps prédéterminé. Si l'intervalle de temps prédéterminé s'est écoulé, le programme passe à l'étape 8 au cours de laquelle l'unité CPU 61 vérifie si toutes les pistes programmées appartenant au programme de lecture défini par l'utilisateur ont été lues. Si le programme de lecture défini par l'utilisateur n'est pas terminé, le programme passe à l'étape 9 et le programme de lecture avance d'un pas. Puis, le programme de la figure 10 passe à l'étape 10 pour laquelle l'horloge d'intervalle de l'unité CPU 61 est remise à l'état initial et le programme revient à l'étape 2 pour exécuter de manière répétée les opérations décrites ci-dessus.

Si à l'étape 8, on décide que le programme de lecture défini par l'utilisateur est terminé, le programme de la figure 10 passe à l'étape 11 à laquelle un compteur (non représenté) dans l'unité CPU 61 compte le nombre de fois que le programme de lecture défini par l'utilisateur a été exécuté ou répété et de plus on vérifie si le nombre résultant du comptage est ou non nul. Si le nombre compté n'est pas égal à zéro, l'état de comptage est décrémenté d'une unité à l'étape 12 et le programme de la figure 10 revient à l'étape 1 à laquelle les opérations décrites ci-dessus sont répétées. Si au contraire l'état de comptage est égal à zéro, à l'étape 11, le programme passe à l'étape 13 selon la figure 10 et l'exécution de toutes les opérations se termine.

De plus si pendant l'exécution du programme de la figure 10, on détecte à l'étape 2 que le bouton d'exécution 48 a de nouveau été enfoncé, alors quel que soit l'état de l'horloge d'intervalle de l'unité CPU 61, le programme de la figure 10 passe à l'étape 9. En d'autres termes quel que soit l'intervalle normal du programme, on peut faire avancer manuellement le programme en enfonçant le bouton d'exécution 48.

Pendant que le programme est exécuté par suite de l'enfoncement du bouton d'exécution 48, si l'on souhaite inverser l'avancement du programme de lecture défini par l'utilisateur, on actionne le bouton de retour pas à pas 49, ce qui est détecté à l'étape 6. En d'autres termes si le bouton de retour pas à pas 49 est enfoncé une fois à l'étape 6, le programme passe à l'étape 14 à laquelle on exécute une étape dans le sens inverse du programme de lecture défini par l'utilisateur.

En outre si à l'étape 3, le bouton plus 34' est enfoncé, le programme passe à l'étape 15 dans laquelle on peut chercher l'information enregistrée dans la piste qui suit directement. De la même manière, si à l'étape 4, on enfonce le bouton moins 33', le programme passe à l'étape 16 à laquelle on peut rechercher l'information enregistrée dans la piste qui précède directement. En d'autres termes, si l'on enfonce le bouton de retour pas à pas 49, il est possible de faire revenir d'un pas le programme de lecture défini par l'utilisateur et de chercher l'information enregistrée dans la piste correspondante alors que si l'on enfonce le bouton moins 33' ou le bouton plus 34', on peut chercher l'information enregistrée dans la piste qui précède ou qui suit directement. Lorsque l'étape 15 ou 16 est terminée, le programme de la figure 10 passe à l'étape 10 à laquelle l'horloge d'intervalle est remise à l'état initial. Puis, le programme revient à l'étape 2 selon la figure 10 et les opérations mentionnées ci-dessus sont répétées.

De plus si l'on enfonce le bouton d'arrêt 31' à l'étape 5, le programme de la figure 10 passe immédiatement à l'étape 13 à laquelle se terminent toutes les opérations.

Bien qu'un seul mode de réalisation préférentiel de l'invention ait été décrit en détail ci-dessus en référence aux dessins, il est clair que l'invention n'est pas limitée à ce mode de réalisation précis et que de nombreuses variantes et modifications peuvent être envisagées par les spécialistes sans sortir du cadre de l'invention.

**Revendications**

1. Appareil d'enregistrement et/ou de reproduction de différents types de signaux d'information sur des pistes d'enregistrement circulaires concentriques d'un disque d'enregistrement magnétique (20), cet appareil comprenant un moteur (23) pour entraîner en rotation, à une vitesse prédéterminée, le disque d'enregistrement magnétique, au moins un transducteur (1A, 1B) pour coopérer avec le disque d'enregistrement magnétique et enregistrer et/ou reproduire les signaux d'information sur les pistes d'enregistrement, un moyen de positionnement (27, 28, 29) couplé au transducteur pour le positionner sur une piste choisie parmi les pistes d'enregistrement, un moyen d'enregistrement (10) pour enregistrer des signaux d'identification correspondant aux différents types de signaux d'information enregistrés sur les pistes d'enregistrement et un moyen d'affichage (17) couplé au moyen d'enregistrement des signaux d'identification pour afficher la marque d'identification des différents types de signaux d'information, dont au moins un type nécessite plus d'une piste pour une représentation plus exacte d'une information par rapport à la représentation de la même information au moyen d'un autre type utilisant une seule piste, ainsi que les identifications des pistes d'enregistrement dans lesquelles ces signaux d'information sont enregistrés, appareil caractérisé en ce qu'il comporte des moyens (38, 39) couplés aux moyens de positionnement du transducteur pour positionner, lorsque cela est demandé, le transducteur par rapport à toutes les pistes d'enregistrement et pour enregistrer la totalité de ces signaux d'identification de toutes les pistes d'enregistrement dans le moyen d'enregistrement afin que le moyen d'affichage affiche la totalité des marques d'identification des différents types de signaux d'information et cela simultanément avec la référence du nombre de pistes d'enregistrement.

2. Appareil selon la revendication 1, caractérisé en ce que les signaux d'identification correspondent à au moins une trame enregistrée d'une information d'image fixe et une image enregistrée d'une information d'image fixe.

3. Appareil selon la revendication 2, caractérisé en ce que le moyen d'affichage est un affichage à tube cathodique qui affiche les signaux d'identification sous la forme d'un tableau d'identification ainsi que l'information relative à l'image fixe.

4. Appareil selon la revendication 3, caractérisé en ce que les signaux d'identification correspondent en outre respectivement à des signaux d'information audio enregistrés et des signaux d'information numériques, enregistrés.

5. Appareil selon la revendication 2, caractérisé en ce que la trame enregistrée de l'information d'image fixe est enregistrée dans l'une des pistes et chaque image enregistrée de l'information d'image fixe est enregistrée dans une paire adjacente de pistes d'enregistrement concentriques.

6. Appareil selon la revendication 1, caractérisé en ce qu'il comprend en outre un bouton de commande susceptible d'être actionné pour définir des séquences de programme du moyen de positionnement des transducteurs, une mémoire de séquences pour enregistrer la séquence de données correspondant aux séquences de programme définies par le bouton de commande et un moyen de contrôle de programme couplé à la mémoire de séquences pour contrôler le moyen de positionnement des transducteurs dans l'ordre selon la séquence des données enregistrées dans la mémoire de séquences.

7. Appareil selon la revendication 6, caractérisé en ce que le moyen de contrôle de programme se met en oeuvre pour interrompre la séquence de programme et pour récupérer une étape de programme précédente de la séquence de programme en réponse à la mise en oeuvre du bouton de contrôle.

8. Appareil selon la revendication 6, caractérisé en ce que le bouton de contrôle se compose d'au moins dix touches et d'une touche de sélection de piste en série et la séquence de données contient en mélange une séquence de sélection aléatoire de piste et une séquence de sélection de piste en série.

9. Appareil selon la revendication 8, caractérisé en ce que la séquence de sélection de piste en série est définie par la commande de la touche de sélection de piste en série après sélection d'un démarrage de piste par commande sélective des dix touches.

## Claims

1. Apparatus for recording and/or reproducing various types of data signals on the concentric circular recording tracks of a magnetic recording disc (20), this apparatus comprising a motor (23) for rotatably driving the magnetic recording disc at a pre-determined speed, at least one transducer (1A, 1B) for cooperating with the magnetic recording disc and recording and/or reproducing the data signals on the recording tracks, a positioning means (27, 28, 29) coupled with the transducer in order to position it on one of the tracks selected from the recording tracks, a recording means (10) for recording the identification signals corresponding to the different types of data signals recorded on the recording tracks, and a display means (17) coupled with the means for recording the identification signals in order to display the identification mark of the various types of data signals, of which at least one type requires more than one track in order to represent data more precisely in relation to the representation of the same data by means of a further type employing a single track, as well as the identification of the recording tracks on which these data signals are recorded, the apparatus being characterised in that it comprises means (38, 39) coupled with transducer positioning means in order to position the transducer, when this is requested, in relation to all the recording tracks and in order to record all these identification signals of all the recording tracks in the recording means in order that the display means displays all the identification marks of the different types of data signals, at the same time as the reference of the number of recording tracks.

2. Apparatus according to claim 1, characterised in that the identification signals correspond to at least one recorded frame of still picture data and a recorded image of still picture data.

3. Apparatus according to claim 2, characterised in that the display means is a cathode ray tube display which displays the identification signals in the form of an identification table as well as the data relating to the still picture.

4. Apparatus according to claim 3,

characterised in that the identification signals further correspond to recorded audio images and recorded digital data signals respectively.

5. Apparatus according to claim 2, characterised in that the recorded frame of the still picture data is recorded on one of the tracks and each recorded picture of the still picture data is recorded on an adjacent pair of concentric recording tracks.

6. Apparatus according to claim 1, characterised in that it further comprises a control button which can be activated in order to define program sequences for the transducer positioning means, a sequence memory for recording the sequence of data corresponding to the program sequences defined by the control button, and a program control means coupled with the sequence memory in order to control the transducer positioning means in the order of the sequence of data recorded in the sequence memory.

7. Apparatus according to claim 6, characterised in that the program control means is used to interrupt the program sequence and to recover a preceding program stage of the program sequence in response to the activation of the control button.

8. Apparatus according to claim 6, characterised in that the control button consists of at least ten keys and one key for selecting the tracks in series, and the data sequence contains a mixture of a random track selection sequence and a Sequence for selecting tracks in series.

9. Apparatus according to claim 8, characterised in that the sequence for selecting tracks in series is defined by the control of the key for selecting tracks in series after a track starting process has been selected by the selective control of the ten keys.

## Patentansprüche

1. Aufzeichnungs- und/oder Wiedergabegerät für verschiedene Arten von Informationssignalen auf konzentrischen, kreisförmigen Aufzeichnungsspuren einer magnetischen Aufzeichnungsplatte (20), dieses Gerät enthaltend einen Motor (23), um die magnetische Aufzeichnungsplatte mit einer vorbestimmten Geschwindigkeit in Drehung zu versetzen, mindestens einen Wandler (1A, 1B), der mit der magnetischen Aufzeichnungsplatte zusammenwirkt und die Informationssignale auf den Aufzeichnungsspuren aufzeichnet und/oder wiedergibt,

ein mit dem Wandler gekoppeltes Positioniermittel (27, 28, 29), um diesen auf der aus den Aufzeichnungsspuren ausgewählten Spur zu positionieren,

ein Aufzeichnungsmittel (10), um Identifikationssignale aufzuzeichnen, die den verschiedenen Arten von auf den Aufzeichnungsspuren aufgezeichneten Informationssignalen zugeordnet sind,

und ein Anzeigemittel (17), das mit dem Aufzeichnungsmittel für die Identifikationssignale gekoppelt ist, um das Kennzeichen der verschiedenen Arten von Informationssignale anzuzeigen, von denen mindestens eine Art zur genaueren Darstellung einer Information mehr als eine Spur benötigt in bezug auf die Darstellung derselben Information mittels einer anderen Art, die eine einzige Spur benutzt, sowie die Identifikationen der Aufzeichnungsspuren, in denen diese Informationssignale aufgezeichnet sind,

dadurch gekennzeichnet,

daß das Gerät Mittel (38, 39) enthält, die mit den Positioniermitteln des Wandlers gekoppelt sind, um den Wandler, wenn dieses gefordert wird, in bezug auf alle Aufzeichnungsspuren zu positionieren und um die Gesamtheit dieser Indentifikationssignale aller Aufzeichnungsspuren auf dem Aufzeichnungsmittel aufzuzeichnen, damit das Anzeigemittel die Gesamtheit der Kennzeichen der verschiedenen Arten von Informationssignalen anzeigt und dieses gleichzeitig mit Hinweis auf die Anzahl der Aufzeichnungsspuren.

2. Gerät nach Anspruch 1,
dadurch gekennzeichnet, daß die Identifikationsignale mindestens einem aufgezeichneten Teilbild einer Standbildinformation und einem aufgezeichneten Bild einer Standbildinformation zugeordnet sind.

3. Gerät nach Anspruch 2,
dadurch gekennzeichnet, daß das Anzeigemittel eine Kathodenstrahlröhre ist, die die Identifikationssignale sowie die Information bezüglich des Standbildes in Gestalt eines Identifikationsverzeichnisses anzeigt.

4. Gerät nach Anspruch 3,
dadurch gekennzeichnet, daß die Identifikationssignale außerdem mit den aufgezeichneten Audio-Informationssignalen bzw. den aufgezeichneten numerischen Informationssignalen korrespondieren.

5. Gerät nach Anspruch 2,
dadurch gekennzeichnet, daß das aufgezeichnete Teilbild der Standbildinformation auf einer der Spuren aufgezeichnet ist, und jedes aufgezeichnete Bild der Standbildinformation auf einem Paar benachbarter konzentrischer Aufzeichnungsspuren aufgezeichnet ist.

6. Gerät nach Anspruch 1,
dadurch gekennzeichnet, daß es außerdem einen Bedienungsknopf enthält, der betätigt werden kann, um die Programmfolgen des Positioniermittels der Wandler festzulegen, einen Folgespeicher, um die Datenfolge zu speichern, die der durch den Bedienungsknopf festgelegten Programmfolge entspricht, und ein Programmsteuermittel, das mit dem Folgespeicher gekoppelt ist, um das Positioniermittel der Wandler in der Reihenfolge gemäß der im Folgespeicher gespeicherten Datenfolge anzusteuern.

7. Gerät nach Anspruch 6,
dadurch gekennzeichnet, daß das Programmsteuermittel als Antwort auf das Betätigen des Bedienungsknopfes die Programmfolge unterbricht und einen vorhergehenden Programmschritt der Programmfolge zurückgewinnt.

8. Gerät nach Anspruch 6,
dadurch gekennzeichnet, daß der Bedienungsknopf sich aus mindestens 10 Tasten und einer Taste zur seriellen Anwahl der Spuren zusammensetzt, und die Datenfolge eine Mischung aus einer Folge zur direkten Anwahl der Spuren und einer Folge zur seriellen Anwahl der Spuren enthält.

9. Gerät nach Anspruch 8,
dadurch gekennzeichnet, daß die Folge zur seriellen Anwahl der Spuren durch die Betätigung der Taste zur seriellen Anwahl der Spuren nach Selektion einer Startspur durch selektives Betätigen der zehn Tasten bestimmt wird.

FIG. 1

EP 0 220 991 B1

FIG. 2

*FIG. 3*

*FIG. 6*

FIG. 4

FIG. 5

## FIG. 7

```
┌─────────────────┐
│   Piste  N      │ ～8
│  ( N = 50 )     │
└────────┬────────┘
         │
         ▼
      ╱──────╲           9
     ╱ Détecteur RF╲      Non
     ╲     ?       ╱──────────┐
      ╲──────╱                │
         │ Oui                │
         ▼                    │
┌─────────────────┐           │
│  Détecteur ID   │ ～10       │
└────────┬────────┘           │
         │                    │
         ▼                    │
┌─────────────────┐           │
│   ID → RAM      │ ～11       │
└────────┬────────┘           │
         │◄───────────────────┘
         ▼
┌─────────────────┐
│    N = N − 1    │ ～12
└────────┬────────┘
         │
         ▼
      ╱──────╲           13
Non  ╱  N = 0  ╲
┌────╲    ?    ╱
│     ╲──────╱
│        │ Oui
│        ▼              14
│   ╭─────────────╮
│   │  Fin S/Prog.│
│   ╰─────────────╯
```

FIG. 8-I

FIG. 8-II

Enregistrement F — 11

Non · N = R ? — 12 · Oui

Enregistrement R — 13

N = S ? — 14 · Non · Oui

Entrée ? — 15 · Non · Oui

Enregistrement S — 16

Non · Entrée ? — 17 · Oui

Enregistrement T — 18

Non · N = P — 19 · Oui

Enregistrement P — 20

N = Q ? — 21 · Non · Oui

Entrée ? — 22 · Non · Oui

Enregistrement Q — 23

Non · Entrée ? — 24 · Oui

①  ②

21

# FIG. 9

Départ

F ? — 1 — Oui / Non

Fin ? — 2 — Oui → Fin — 14 / Non

N = A — 6

T ? — 7 — Non

N = B — 8

E ? — 9 — Non / Oui

Reproduction N = A — 10

Reproduction N = A ± 1 — 11

A = B — 12 — Non / Oui

Reproduction N° N = B — 13

N = C — 3

E ? — 4 — Non

Reproduction N = C — 5

FIG. 10